# EUROPEAN PATENT SPECIFICATION

(11) **EP 0 414 879 B1**
(45) Date of publication and mention of the grant of the patent: **12.01.1994**
(21) Application number: 90904970.2
(22) Date of filing: 12.03.1990
(51) Int. Cl.: B01D 33/21

(54) **FILTER FOR CONTINUOUS FILTRATION**
FILTER FÜR KONTINUIERLICHE FILTRIERUNG
FILTRE DE FILTRATION CONTINUE

(30) Priority: 13.03.1989 SE 8900881
(43) Date of publication of application: 06.03.1991
(73) Proprietor: CAUSTEC AKTIEBOLAG, S-402 75 Göteborg (SE)
(72) Inventor: STRID, Kent, S-810 28 Järbo (SE)
(74) Representative: Säfwenberg, Björn
(86) International application number: SE9000159
(87) International publication number: WO9010490

(56) References cited:
- GB-A- 939 975
- SE-B- 445 655
- SE-B- 455 379
- US-A- 2 816 663

## Description

The present invention relates to a filter for continuous filtering of a suspension under pressure or under vacuum, or, under a combination of pressure and vacuum, said filter including a vessel containing the suspension to a certain level and a space of gas positioned above the suspension, a substantially horizontal centre shaft rotatably arranged in the vessel, filter discs arranged at a distance from each other along the centre shaft substantially perpendicular thereto, said filter discs consisting of filter sectors with surrounding filter cloth and internal channels for filtrate and gas obtained during the filtering operation, means in the centre shaft for providing communication between the internal channels of the filter sectors and an outlet from the vessel, removal means arranged to remove an outer layer of filter cake material deposited on the filter cloth during rotation of the filter discs, so as to leave a precoat layer of filter cake material on the filter cloth, said precoat layer constituting a filter medium, and means for receiving the filter cake material removed by said removal means.

In known filters of the kind stated, the means for providing communication between the interior channels of the filter sectors and the outlet from the vessel consists of a number of channels corresponding to the number of filter sectors. Thus, when the number of filter sectors is, for instance, 20, which is often the case, there are accordingly 20 channels in the centre shaft, resulting in that the centre shaft must be formed with relatively large diameter and is also complicated and expensive.

The problem to be solved by the present invention is to provide a filter of the kind initially stated, which includes a less complicated, smaller diameter and a cheaper centre shaft than centre shafts according to the state of art.

According to the present invention, this problem is solved in that said communication means in the centre shaft between the interior channels of the filter sectors and the outlet forms only one channel common for the filtrate and the gas from all filter sectors in the vessel.

As a result of the smaller diameter centre shaft obtained by the present invention, the diameter of the filter discs can be decreased with maintained filtering surface.

Preferably, the centre shaft is tubular, which results in a still more simplified and a cheaper manufacture.

The configuration of the centre shaft with only one channel results in a further essential advantage. In a preferred embodiment of the invention, a filtrate separator is connected to the outlet of the vessel (i.e., the outlet end of the centre shaft) and arranged for separating filtrate and gas. In previously known filters, there are sealing problems in the transition from the centre shaft. Such transition uses a so called filtrate valve having a wear disk as a sealing between the rotating centre shaft and an outlet tube to a filtrate separator. The filtered liquid flowing within the channels towards the outlet is rather clean and causes little wears in the centre of the wear disk and the shaft, while the outer portion of the sealing is located in unfiltrated medium which forces its way in between the sealing surfaces and wear the sealing element at its periphery. For this reason, it has been necessary to change wear disk relatively often, and there is, furthermore, a risk for wear of the end of the centre shaft. Moreover, the transition from the rotating centre shaft to the stationary connection to the filtrate separator is complicated and expensive. In a preferred embodiment of the present invention, these disadvantages have been extesively eliminated, particulary when the centre shaft is tubular, in that the filtrate separator is provided with a tube having dimensions corresponding to those of the tubular centre shaft, and that a coupling including a sealing is provided for interconnection of the tube and the centre shaft. Apart from being much cheaper than the filtrate valve discussed above, such a coupling involves no sealing problems.

In previously known filters of the kind mentioned, the removal means consists of a doctor or scraper, which is arranged immediately above the suspension level, where the filter sectors immerse into the suspension, i.e., at the end of the rotation of the filter sectors in the gas space. In these filters, the scrapers are therefore substantially horizontally positioned. However, such a positioning of the scrapers causes several disadvantages. Thus, the scraped-off material will shuffle over the scraper with an accompanying risk for deposit on the scraper. Moreover, this positioning of the scrapers involves a limitation of the utilization of the filtering surfaces of the filter discs, since the suspension level in the filter vessel can not be positioned higher than the position of the scraper. Furthermore, the positioning of the scrapers results in that the receiving means for scraped-off material must be formed comparatively wide, at least in its upper part, and then taper downwardly to a circular outlet, which results in the necessity of having a relatively large distance between the filter discs. Moreover, there is a risk for scraped-off material to be built up in the conical transition from a rectangular cross section at the scrapers to a circular cross section at the outlet for scraped-off material through the bottom of the vessel.

These disadvantages have been eliminated by another preferred embodiment of the invention, in that the removal means consists of an substantially vertically arranged scraper for removing said outer layer of filter cake material along a substantially vertical line. By this positioning of the scraper, scraped-off material will slide and fall substantially without resistance along and from the scraper. Accordingly, the scraper is not under load. Moreover, the scraped-off material falls in a controlled, substantially hour-glass form. Furthermore, the risk of build-up of scraped-off material is eliminated, in contrast to what happens in the case of horisontally positioned scrapers. Another advantage with the positioning of the scrapers according to the invention is that the suspension level in the filter can be drastically raised so that the filtering surface can be optimally used, resulting in high and optimal capacity for each filter disc. Another advantage with the positioning of the scrapers according to the invention results in a filter construction having considerably less distance between the filter discs on the centre shaft, which enables an substantially smaller filter dimension for the same capacity.

In a preferred embodiment of the invention, the receiving means consists of an essentially vertically arranged outlet pipe. Due to the form of the vertical scraper, this outlet pipe below the scraper can have a smaller diameter than corresponding receiving means in previously known filters and it need not be conical. This contributes to above mentioned reduced distance between the filter discs.

Only an outer layer of the filter cake on the filter cloth is removed by the scraper during each revolution of the filter discs, and the remaining filter cake, the precoat layer, augments the filter cloth as a filtering medium. In course of time, the precoat layer becomes too tight and must be removed. Conventionally, the entire precoat layer is blown off by blowing air into one of the channels of the centre shaft via a filtrate valve arranged at the outlet end of the shaft, causing the entire precoat layer from a sector falls off the filter cloth. As a result, a large amount of filter cake material drops at the same time down into the tapered receiving devices, causing a great risk of clogging. The internal blowing also causes the sector cloths to be blown up immediately ahead of the scraper resulting in a great risk for the cloth to be damaged by the scraper. Moreover, the blow-off of the precoat layer is uncontrolled blown gas rushes through the filter cloth where it can pass most easily, i.e., where the layer is first released, the gas rushes most easily out, and accordingly leaves certain sector cloths unblown. In a preferred embodiment of the invention, there is also precoat layer removal means for intermittent removal of the precoat layer, and this means is positioned above the receiving device, preferably formed as an outlet pipe and alongside the substantially vertical scraper. The precoat removal is preferably carried out by a substantially vertically positioned spray pipe for high pressure washing. The spray pipe is positioned immediately ahead of the scraper, and the wash liquid is supplied to the wash pipe through a separate conduit. This arrangement allows controlled flushing, and and flush-off material falls in a controlled manner and in lesser amount per unit of time down into the receiving means, compared with the above-mentioned blowing of the precoat layer in the prior art. In other words, intermittent removal of the precoat layer in accordance with the present invention removes only the material that at the moment is fed to the removal means, i.e., a small layer per unit of time. Nor is there any risk that the cloth will be damaged by the scraper when using the removal technique according to the invention. The specified shape and positioning of the removal means also contributes to the compact construction of the filter.

In addition to the above-mentioned advantages, the filter according to the present invention also provides the advantages that:
- the number of filter sectors is limited to what can be inserted into the filter via assembly openings;
- a small number of filter sectors and filter discs reduces manufacturing and assembly errors;
- more straight filter sectors can be manufactured;
- filtering can continue for a longer time since the scraper can come closer to the filter disc without any risk that it will grip in and damage the filter cloth;
- lower manufacturing costs;
- lower maintenance costs;
- lower shut-down time;
- the diameter of the filter discs can be decreased with maintained filtering surface, owing to the fact that the centre shaft has a smaller diameter;
- the filtering surface of the filter discs can be used optimally since the suspension level can be raised in the filter vessel;
- maximum capacity per installed filter surface is achieved;
- the volume of the filter, compared to prior art filters of at least as large a capacity, can be made smaller and at lower cost; for example, the distance between filter discs can be decreased by about 35% with a correspondingly shorter centre shaft, and the diameters of the vessel and of the filter discs can be substantially reduced.

An embodiment of the invention will now be described in more detail with reference to accompanying schematic drawings, wherein
fig. 1 is a side view, partly in section, of a filter according to the invention,
fig. 2 is a vertical section of the filter, and
fig. 3 shows in larger scale a view from above of certain elements included in the filter.

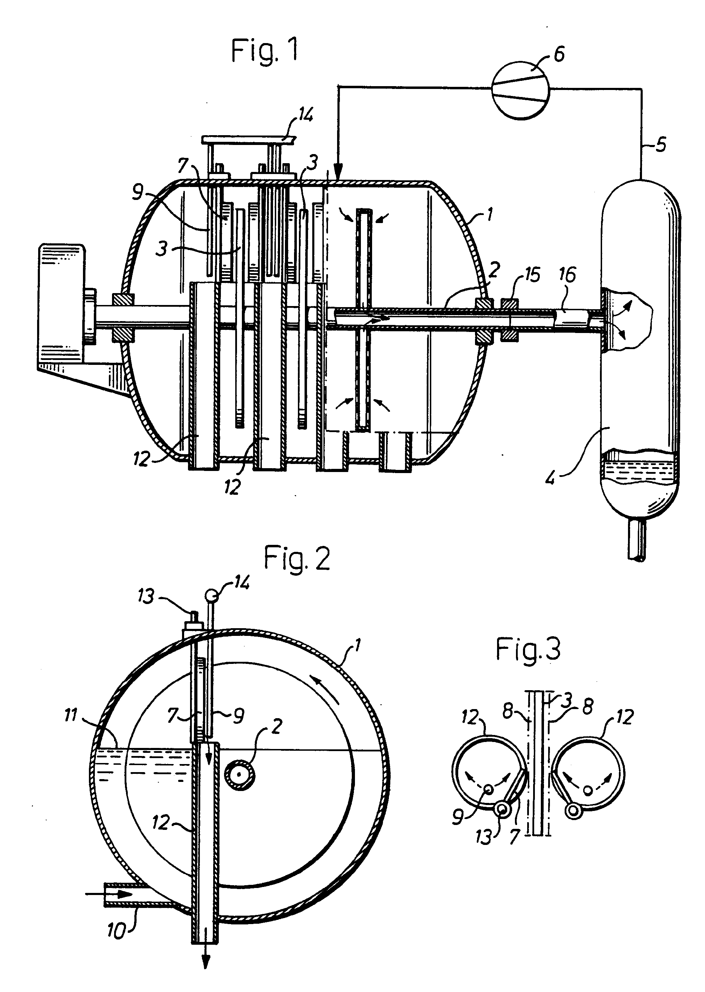

The filter shown in the drawing, which is a pressure filter, includes, like prior art pressure filters, a substantially cylindrical pressure vessel 1, a centre shaft 2 rotatably journaled in the pressure vessel and a number of filter discs 3 arranged at a distance from each other on the centre shaft. Each filter disc consists of a number of disc sectors (not shown), for instance having the configuration shown in US-A-4695381. As usual, the filter sectors consist of a surrounding filter cloth and interior channels which are connected to the centre shaft for discharging the filtrate and gas obtained during the filtering operation to a filtrate separator 4 for separating filtrate and gas. The gas is returned to the pressure vessel 1 via a gas conduit 5 provided with a compressor 6. Moreover, the filter indludes a removal device or scraper 7 for removing the filter cake 8 (see fig. 3) obtained on the filter cloth during the filtering operation, a device 9 for removing filter cake material on the cloth located underneath scraped-off filter material, i.e., the so-called precoat layer, a device 12 for receiving the removed filter cake material and a device for washing the filter cloth. The filter vessel also comprises an inlet 10 for supplying suspension and maintaining the suspension at a certain level 11 in the pressure vessel.

The pressure vessel shown in the drawing has, however, a number of essential distinctions compared to previously known filters.

An essential novelty in the filter according to the invention is that the centre shaft consists of.only one common channel for filtrate and gas from all filter sectors in the pressure vessel, as distinguished from previously known filters where the filter shaft was formed with a channel from each filter sector. As shown in the drawings, the centre shaft consists of only one cylindrically tube with connections to the filter sectors. Besides a considerably simpler construction and lower manufacturing costs, a simpler and more reliable connection 15 to the filtrate separator 4 is obtained, compared with the comparatively complicated filtrate valves which are arranged at centre shafts formed with several channels in previously known filters. The connection 15 is positioned outside the filter vessel adjacent the vessel, but can also be positioned at another location, e.g., inside the filter vessel. The connection 15 between the rotating centre tube 2 and a tube 16 connected to the filtrate separator 4 is simple in construction and permits simple sealing, preferably a mechanical sealing. The centre shaft can be manufactured with considerably less diameter than prior art centre shafts including a number of channels.

Another essential novelty in the filter according to the invention is that the scraper 7 is substantially vertically arranged in the gas space above the suspension level, whereby scraped-off material falls in a controlled form from the scraper and does not load the scraper, and the risk for scraped-off material to be built up on the scraper is eliminated. The scraper is preferably inclined somewhat outwardly with respect to the centre shaft 2. The receiving device 12 for the scraped-off material consists of a vertical cylindrical tube having less diameter than previously known receiving devices formed with a cone, thereby obviating the risk of build-up of scraped-off material in the receiving device. This positioning of the scraper and cylindrical tube shape of the receiving device means that the distance between the filter discs can be reduced, e.g., by 35%. The positioning of the scraper also means that the suspension level in the filter can be raised, whereby the filtration surface can be used optimally.

As appears from the drawing the scraper 7 is adjustable about a shaft 13.

With the filter configuration according to the invention, removal of the precoat layer and washing of the filter cloth can be carried out in an advantageous manner. A substantially vertically arranged precoat layer removal device combined with a washing device in the shape of a spray tube 9 is arranged ahead of the scraper in the rotational direction of the filter discs and above the outlet pipe 12. The spray tube receives spray liquid from conduit 14. Sprayed-off material thereby falls in a controlled manner down into the outlet pipe 12 and in an adapted amount per unit of time. Moreover, the risk that the filter cloth on the filter discs will be damaged by the scraper is eliminated, as distinguished from the case in previously known filters where removal of precoat layer takes place by blowing from inside outwardly through the filter cloth.

A filter for continous filtering under pressure has been shown on the drawing and described above. It shall, however, be noted that the filter can be a vacuum filter, or, a filter for filtering under pressure and vacuum.

## Claims

1. Filter for continuous filtering of a suspension under pressure and/or vacuum, comprising
- a vessel (1) containing the suspension to a certain level and a space of gas above the suspension,
- a substantially horizontal centre shaft (2) rotatably arranged in the vessel,
- filter discs (3) arranged at a distance from each other along the centre shaft substantially perpendicular thereto, said filter discs consisting of filter sectors with surrounding filter cloth and internal channels for filtrate and gas obtained during the filtering operation,
- means in the centre shaft for providing communication between the internal channels of the filter sectors and an outlet (15) from the vessel,
- removal means (9) for each filter disc arranged to remove an outer layer of filter cake material (8) deposited on the filter cloth during rotation of the filter discs, so as to leave a precoat layer of filter cake material on the filter cloth, said precoat layer constituting a filter medium, and
- means (12) for receiving the filter cake material removed by said removal means,
**characterized** in that
said communication means in the centre shaft (2) between the interior channels of the filter sectors and the outlet forms only one channel common for the filtrate and the gas from all filter sectors in the vessel (1).

2. Filter according to claim 1, **characterized** in that the centre shaft (2) is tubular.

3. Filter according to claim 1 or 2, **characterized** by a filtrate separator (4) connected to the outlet of the vessel and arranged for separating filtrate and gas.

4. Filter according to claim 3, **characterized** by a gas conduit (5) between the filtrate separator (4) and the vessel (1) for returning the separated gas to the gas space of the vessel.

5. Filter according to claim 4, **characterized** by means (6) in the gas conduit (5) for increasing the gas pressure before returning the gas to the vessel (1).

6. Filter according to claims 3-5, **characterized** in that the filtrate separator (4) is provided with a tube (16) having dimensions corresponding to those of the tubular centre shaft (2), and that a coupling (15) including a sealing is arranged for interconnecting the tube (16) and the centre shaft (2).

7. Filter according to any of the preceding claims, **characterized** in that said removal means (9) consists of a substantially vertically arranged scraper (7) for removing said outer layer of filter cake material (8) along a substantially vertical line.

8. Filter according to claim 1 or 2, **characterized** in that said receiving means (12) consists of a substantially vertically arranged outlet pipe.

9. Filter according to any one of the preceding claims, **characterized** by precoat layer removal means positioned in the gas space above said receiving means (12) at the side of the scraper (7) and arranged to remove intermittently said precoat layer of filter cake material.

10. Filter according to claim 9, **characterized** in that said precoat layer removal means (9) consists of a substantially vertically arranged spray tube for high pressure spraying.

11. Filter according to any one of the preceding claims, **characterized** in that the suspension level (11) in the vessel is positioned above the centre shaft (2).

## Patentansprüche

1. Filter für die kontinuierliche Filtrierung einer Suspension unter Druck und/oder Vakuum mit:
- einem Behälter (1), der bis zu einem bestimmten Niveau die Suspension enthält und mit einem Gasraum oberhalb der Suspension,
- einer im wesentlichen horizontalen Zentralwelle (2), die in dem Behälter drehbar angeordnet ist,
- Filterscheiben (3), die in einem Abstand zueinander entlang der Zentralwelle (2) und senkrecht zu ihr stehend angeordnet sind, wobei die Filterscheiben aus Filtersektoren mit sie umgebenden Filtertuch und inneren Kanälen für während des Filtrierungsvorganges angefallenes Filtrat und Gas bestehen,
- Mitteln in der Zentralwelle zur Schaffung einer Verbindung zwischen den inneren Kanälen der Filtersektoren und einem Ausgang (15) aus dem Behälter,
- Entfernungsmitteln für jede Filterscheibe (9), die so angeordnet sind, daß sie eine äußere Schicht von Filterkuchenmaterial (8) entfernt, das auf dem Filtertuch während der Drehung der Filterscheiben abgelagert worden ist, so daß eine Hilfsschicht aus Filterkuchenmaterial auf dem Filtertuch belassen wird, wobei die Hilfsschicht ein Filtermedium bildet und
- Mitteln (12) zur Aufnahme des Filterkuchenmaterials, das von den Entfernungsmitteln entfernt worden ist,
dadurch gekennzeichnet, daß das Verbindungsmittel in der Zentralwelle (2) zwischen den inneren Kanälen der Filtersektoren und dem Ausgang nur einen gemeinsamen Kanal für das Filtrat und das Gas aus allen Filtersektoren in dem Behälter (1) bildet.

2. Filter nach Anspruch 1,
dadurch gekennzeichnet, daß die Zentralwelle (2) rohrförmig ist.

3. Filter nach den Ansprüchen 1 oder 2, gekennzeichnet durch einen Filtrattrenner (4), der mit dem Ausgang des Behälters verbunden ist und zur Trennung von Filtrat und Gas angeordnet ist.

4. Filter nach Anspruch 3 gekennzeichnet durch ein Gasrohr (5) zwischen dem Filtrattrenner (4) und dem Behälter (1) zur Rückführung des abgetrennten Gases zu dem Gasraum des Behälters.

5. Filter nach Anspruch 4, gekennzeichnet durch Mittel (6) in dem Gasrohr (5) zur Erhöhung des Gasdruckes vor der Rückführung des Gases zu dem Behälter (1).

6. Filter nach den Ansprüchen 3 bis 5,
dadurch gekennzeichnet, daß der Filtrattrenner (4) mit einem Rohr (16) versehen ist, dessen Abmessungen denen der rohrförmigen Zentralwelle (2) entsprechen, und daß eine Kupplung (15) mit einer Dichtung zur Verbindung des Rohres (16) und der Zentralwelle (2) vorgesehen ist.

7. Filter nach einem der vorhergehenden Ansprüche, dadurch gekennzeichnet, daß das Entfernungsmittel (9) aus einem im wesentlichen vertikal angeordneten Abkratzer (7) zur Entfernung der äußeren Schicht des Filterkuchenmaterials (8) entlang einer im wesentlichen vertikalen Linie besteht.

8. Filter nach den Ansprüchen 1 oder 2,
dadurch gekennzeichnet, daß das Aufnahmemittel (12) aus einem im wesentlichen vertikal angeordneten Auslaßrohr besteht.

9. Filter nach einem der vorhergehenden Ansprüche, gekennzeichnet durch Hilfsschichtentfernungsmittel, die im Gasraum oberhalb der Aufnahmemittel (12) auf der Seite des Abkratzers (7) positioniert sind und zum intermittierenden entfernen der Hilfsschicht aus Filterkuchenmaterial vorgesehen sind.

10. Filter nach Anspruch 9,
dadurch gekennzeichnet, daß die Hilfsschichtentfernungsmittel (9) aus einem im wesentlichen vertikal angeordneten Sprührohr zur Hochdruckbesprühung bestehen.

11. Filter nach einem der vorhergehenden Ansprüche, dadurch gekennzeichnet, daß das Suspensionsniveau (11) in dem Behälter oberhalb der Zentralwelle (2) liegt.

## Revendications

1. Filtre de filtration continue d'une suspension sous pression et/ou vide, comprenant :
un récipient (1) renfermant la suspension jusqu'à un certain niveau et un espace de gaz au-dessus de la suspension,
un arbre central (2) sensiblement horizontal disposé à rotation dans le récipient,
des disques filtrants (3) espacés les uns des autres le long de l'arbre central et sensiblement perpendiculaires à celui-ci, lesdits disques filtrants consistant en secteurs filtrants avec un tissu filtrant autour et des conduits internes pour le filtrat et le gaz obtenus durant l'opération de filtration,
un moyen dans l'arbre central pour faire communiquer les conduits internes des secteurs filtrants et une sortie (15) du récipient,
un moyen d'enlèvement (9) pour chaque disque filtrant agencé de manière à enlever une couche externe de gâteau de filtration (8) déposée sur le tissu filtrant durant la rotation des disques filtrants de sorte à laisser une sous-couche de gâteau de filtration sur le tissu filtrant, ladite sous-couche constituant un moyen filtrant, et
un moyen (12) pour recevoir le gâteau de filtration enlevé par ledit moyen d'enlèvement,
caractérisé en ce que
ledit moyen de communication dans l'arbre central (2) entre les conduits internes des secteurs filtrants et la sortie forme un seul conduit commun au filtrat et au gaz provenant de tous les secteurs filtrants dans le récipient (1).

2. Filtre selon la revendication 1, caractérisé en ce que l'arbre central (2) est tubulaire.

3. Filtre selon la revendication 1 ou 2, caractérisé par un séparateur de filtrat (4) relié à la sortie du récipient et agencé pour séparer le filtrat du gaz.

4. Filtre selon la revendication 3, caractérisé par un conduit de gaz (5) entre le séparateur de filtrat (4) et le récipient (1) pour ramener le gaz séparé jusqu'à l'espace de gaz du récipient.

5. Filtre selon la revendication 4, caractérisé par un moyen (6) dans le conduit de gaz (5) pour augmenter la pression du gaz avant de ramener le gaz jusqu'au récipient (1).

6. Filtre selon les revendications 3 à 5, caractérisé en ce que le séparateur de filtrat (4) est doté d'un tube (16) ayant des dimensions correspondant à celles de l'arbre central tubulaire (2), et en ce qu'un raccord (15) comprenant un joint est agencé pour relier le tube (16) et l'arbre central (2).

7. Filtre selon l'une quelconque des revendications précédentes, caractérisé en ce que ledit moyen d'enlèvement (9) consiste en une raclette disposée sensiblement verticalement pour enlever ladite couche externe de gâteau de filtration (8) le long d'une ligne sensiblement verticale.

8. Filtre selon la revendication 1 ou 2, caractérisé en ce que ledit moyen de réception (12) consiste en un tuyau de sortie disposé sensiblement verticalement.

9. Filtre selon l'une quelconque des revendications précédentes, caractérisé par un moyen d'enlèvement de sous-couche positionné dans l'espace de gaz au-dessus dudit moyen de réception (12) sur le côté de la raclette (7) et agencé pour enlever par intermittence ladite sous-couche de gâteau de filtration (8).

10. Filtre selon la revendication 9, caractérisé en ce que ledit moyen d'enlèvement (9) de sous-couche consiste en un tube de pulvérisation disposé sensiblement verticalement pour une pulvérisation à haute pression.

11. Filtre selon l'une quelconque des revendications précédentes, caractérisé en ce que le niveau (11) de la suspension dans le récipient se situe au-dessus de l'arbre central (2).
